# EUROPÄISCHE PATENTANMELDUNG

(11) **EP 2 541 075 A2**
(43) Veröffentlichungstag der Anmeldung: **02.01.2013**
(21) Anmeldenummer: 12004004.3
(22) Anmeldetag: 22.05.2012
(51) Int. Cl.: F16B 5/06

(54) **Befestigungsclip**

(30) Priorität: 01.07.2011 DE 102011106310
(71) Anmelder: TRW Automotive Electronics & Components GmbH, 78315 Radolfzell (DE)
(72) Erfinder: Kuhm, Michael, 37340 Ingwiller (FR); Maurer, Jerome, 67700 Gottenhouse (FR); Balluch, Susanne, 67304 Eisenberg (DE)
(74) Vertreter: Prinz & Partner

(57) **Zusammenfassung**

Ein Befestigungsclip (10) zur Befestigung eines Bauteils (42) an einem Träger (44) weist ein Halteelement (12) auf, das in eine Einschubrichtung (R) in eine Öffnung (46) des Trägers (44) eingeschoben werden kann und das mehrere Spreizarme (28) aufweist, die hinter der Öffnung (46) des Trägers (44) eingreifen können, sowie ein Spreizelement (14), das gegen die Einschubrichtung (R) in eine Aussparung (19) des Halteelements (12) eingeschoben werden kann, sodass die Spreizarme (28) aus einer Ausgangsstellung in eine gespreizte Stellung gebracht werden, wobei in einer Vormontageposition das Halteelement (12) und das Spreizelement (14) einstückig miteinander durch Verbindungsstege (16) verbunden sind, die jeweils eine Sollbruchstelle darstellen, und die insbesondere zwischen dem in Einschubrichtung (R) vorderen Ende des Halteelements (12) und dem in Einschubrichtung (R) hinteren Ende des Spreizelements (14) vorgesehen sind.

## Beschreibung

Die Erfindung betrifft einen Befestigungsclip zur Befestigung eines Bauteils an einem Träger, mit einem Halteelement, das in eine Einschubrichtung in eine Öffnung des Trägers eingeschoben werden kann und das mehrere Spreizarme aufweist, die hinter der Öffnung des Bauteil eingreifen können, und mit einem Spreizelement, das gegen die Einschubrichtung in eine Aussparung des Halteelements eingeschoben werden kann, sodass die Spreizarme aus einer Ausgangsstellung in eine gespreizte Stellung gebracht werden.

Aus dem Stand der Technik sind verschiedene zweiteilige Befestigungsclips zur Befestigung eines Bauteils an einem Träger bekannt. Diese bestehen beispielsweise aus einem Halteelement, das in eine Öffnung eines Trägers eingesetzt werden kann und der das Bauteil am Träger fixiert, sowie einem Spreizelement, das in das Halteelement eingeschoben werden kann und das Halteelement aufspreizt und dadurch am Träger fixiert. Dazu sind am Halteelement Spreizarme vorgesehen, die hinter der Öffnung des Bauteils eingreifen können. Das Spreizelement ist so ausgebildet, dass dieses die Spreizarme in eine gespreizte Stellung verschieben kann, in der die Spreizarme am Bauteil eingreifen können. Das Spreizelement wird dabei entgegen der Einschubrichtung in das Haltelement gezogen, so dass das Spreizelement in keiner Montageposition nach vorne über das Halteelement heraussteht und eine im Wesentlichen mit der Oberfläche des Trägers bündige Montage des Befestigungsclips möglich ist. Bei der Montage oder beim Transport des Befestigungsclips können aber einzelne Teile eines solchen Befestigungsclips verloren gehen. Zudem muss das Spreizelement vor oder nach der Montage des Halteelements an diesem positioniert werden.

Aufgabe der Erfindung ist es, einen Befestigungsclip bereitzustellen, der einfacher zu montieren ist und ein Verlieren einzelner Teile beim Transport und bei der Montage sicher verhindert. Zudem soll der erfindungsgemäße Befestigungsclip einfacher herzustellen sein.

Zur Lösung dieser Aufgabe ist ein Befestigungsclip zur Befestigung eines Bauteils an einem Träger vorgesehen, mit einem Halteelement, das in eine Einschubrichtung in eine Öffnung des Trägers eingeschoben werden kann und das mehrere Spreizarme aufweist, die hinter der Öffnung des Bauteils eingreifen können, und mit einem Spreizelement, das gegen die Einschubrichtung in eine Aussparung des Halteelements eingeschoben werden kann, sodass die Spreizarme aus einer Ausgangsstellung in eine gespreizte Stellung gebracht werden. In einer Vormontageposition sind das Halteelement und das Spreizelement einstückig miteinander durch Verbindungsstege verbunden, die jeweils eine Sollbruchstelle darstellen, und die insbesondere zwischen dem in Einschubrichtung vorderen Ende des Halteelements und dem in Einschubrichtung hinteren Ende des Spreizelements vorgesehen sind. Der Befestigungsclip ist also im Vormontagezustand einstückig ausgebildet, wobei das Halteelement und das Spreizelement in Einschubrichtung gewissermaßen hintereinander angeordnet sind und über die Verbindungsstege miteinander verbunden sind. Der Befestigungsclip kann als eine Einheit in Einschubrichtung in die Öffnung des Trägers eingesetzt werden. Anschließend wird das Spreizelement gegen die Einschubrichtung in die Aussparung des Halteelements gezogen, wobei die als Sollbruchstellen ausgebildeten Verbindungsstege brechen und so eine Bewegung des Spreizelements relativ zum Halteelement ermöglicht wird. Da die Elemente des Befestigungsclips einstückig miteinander verbunden sind, ist eine einfachere Montage möglich, da keine nachträgliche Positionierung des Spreizelements am Halteelement erforderlich ist. Das Spreizelement kann dadurch nicht aus dem Halteelement herausfallen. Zudem kann der Befestigungsclip einstückig in einem Spritzgussvorgang hergestellt werden, wodurch der Herstellungsaufwand reduziert wird.

Vorzugsweise sind am Halteelement und am Spreizelement korrespondierende Rastelemente vorgesehen, die das Spreizelement in einer Zwischenmontageposition, in der die Sollbruchstelle gelöst und das Spreizelement teilweise in das Halteelement eingeschoben ist, aber sich die Spreizarme in der Ausgangsstellung befinden, am Halteelement fixieren. Bei der Montage des Befestigungsclips wird das Spreizelement nach dem Lösen der Sollbruchstellen teilweise in das Halteelement eingeschoben, bis die korrespondierenden Rastelemente aneinander einrasten. In dieser Zwischenposition werden die Spreizarme des Halteelements aber noch nicht nach außen in die aufgespreizte Stellung bewegt, so dass der Befestigungsclip noch bewegt werden kann. Dies ermöglicht beispielsweise eine nachträgliche Positionsänderung oder sogar eine Demontage des Befestigungsclip, wobei jeweils sichergestellt ist, dass das Spreizelement nicht verloren gehen kann.

In dieser Ausführungsform muss das Spreizelement weiterhin gegenüber dem Rastelement gegen die Einschubrichtung verschiebbar sein, damit das Spreizelement die Spreizarme des Halteelements in eine gespreizte Stellung bringen kann. Um dies zu ermöglichen, ist die Rastverbindung beispielsweise durch einen Rasthaken und eine längliche Ausnehmung gebildet, in der der Rasthaken in Einschubrichtung verschiebbar ist, sodass das Spreizelement von der Zwischenmontageposition in die Endmontageposition verschiebbar ist, ohne die Rastverbindung zu lösen. Das Spreizelement und das Halteelement sind also unverlierbar miteinander verbunden, aber gegeneinander beweglich.

Um das Spreizelement entgegen der Einschubrichtung in das Halteelement einzuschieben, kann beispielsweise ein Zugmittel, insbesondere eine Schraube vorgesehen sein, das am Spreizelement angreift und dieses gegen die Einschubrichtung in das Halteelement ziehen kann. Üblicherweise wird der Befestigungsclip so in einen Träger eingesetzt, dass dieser von der Rückseite des Trägers nicht zugänglich ist. Über ein Zugmittel ist auch in einem solchen Einbauzustand, in dem ein direkter Zugang zum Spreizelement nicht möglich ist, ein Verschieben des Spreizelements möglich.

Vor dem Aufspreizen der Spreizarme hat der Befestigungsclip üblicherweise ein gewisses Spiel in der Öffnung, durch das ein Anziehen des Zugmittels aber auch eine exakte Positionierung erschwert ist. Zudem kann der Befestigungsclip aus der Öffnung herausfallen. Um das Halteelement vor dem Eingreifen der Spreizarme in der Öffnung des Trägers zu fixieren, können beispielsweise an der Außenseite des Halteelements Rastlaschen vorgesehen sein, die an der Öffnung des Bauteils angreifen können. Diese können eine Vorfixierung des Halteelements ermöglichen, wodurch eine ausreichend hohe Haltekraft bereitgestellt wird, sodass das Halteelement, also der Befestigungsclip nicht aus der Öffnung herausfallen kann. Die vollständige Haltekraft, die zum Halten des Trägers erforderlich ist, wird erst anschließend durch ein Aufspreizen der Spreizarme bereitgestellt.

Die Rastlaschen sind beispielsweise jeweils paarweise gegenüberliegend vorgesehen, sodass eine mittige Zentrierung des Halteelements in der Öffnung erfolgt. Zudem können mehrere in Einschubrichtung beabstandete Rastlaschen vorgesehen sein, wodurch auch bei verschiedenen Dicken des Trägers eine ausreichende Vorfixierung erfolgen kann.

Um ein Verdrehen des Halteelements bzw. des Befestigungsclips zu verhindern, ist das Halteelement vorzugsweise rechteckig ausgebildet, und die Rastlaschen sind an entgegengesetzten Seitenflächen vorgesehen.

In dieser Ausführungsform sind die Spreizarme beispielsweise an den beiden übrigen Flächen des Halteelements vorgesehen, also jeweils um 90° versetzt zu den Rastlaschen.

Das Spreizelement kann beispielsweise Einführschrägen aufweisen, die die Spreizarme radial nach außen drücken.

Weitere Vorteile und Merkmale ergeben sich aus der nachfolgenden Beschreibung in Verbindung mit den beigefügten Zeichnungen. In diesen zeigen:
- Figur 1 eine erste Seitenansicht eines erfindungsgemäßen Befestigungsclips,
- Figur 2 eine zweite Seitenansicht des Befestigungsclips aus Figur 1,
- Figur 3 eine Draufsicht auf den Befestigungsclip aus Figur 1,
- Figur 4 eine Schnittansicht durch den Befestigungsclip in der Ebene IV-IV aus Figur 2,
- Figur 5 eine erste perspektivische Ansicht des Befestigungsclips aus Figur 1 in einer Zwischenmontageposition des Spreizelements,
- Figur 6 eine zweite perspektivische Ansicht des Befestigungsclips aus Figur 5,
- Figur 7 den Befestigungsclip aus Figur 5 in eingesetztem Zustand in einem Träger,
- Figur 8 eine zweite Ansicht des Befestigungsclips aus Figur 7,
- Figur 9 den Befestigungsclip aus Figur 1 in einem Endmontagezustand des Spreizelements, und
- Figur 10 eine zweite Ansicht des Befestigungsclips aus Figur 9.

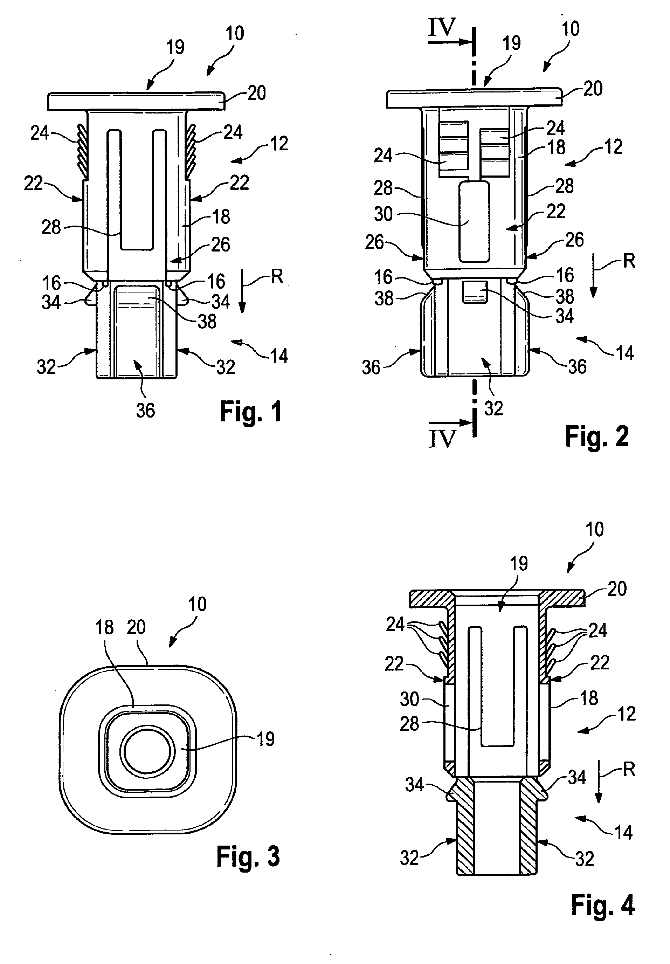

In den Figuren 1 bis 4 ist ein Befestigungsclip 10 zur Befestigung eines Bauteils an einem Träger, beispielsweise eines Verkleidungsteils an der Karosserie eines Fahrzeugs dargestellt, der in einer Einschubrichtung R in einen Träger eingeschoben werden kann. Der Befestigungsclip hat ein Halteelement 12 sowie ein Spreizelement 14, die in der in den Figuren 1 bis 4 dargestellten Vormontageposition über Verbindungsstege 16 miteinander verbunden sind.

Das Halteelement 12 hat einen länglichen Grundkörper 18 mit einer in Einschubrichtung R durchgehenden Aussparung 19 und einem Flansch 20, der am in Einschubrichtung hinteren Ende des Halteelements 12 angeordnet ist. Der Grundkörper 18 hat einen im Wesentlichen rechteckigen Querschnitt (siehe Figur 3).

Am Grundkörper 18 sind an zwei gegenüberliegenden Seitenflächen 22 (siehe Figur 1) jeweils mehrere Rastlaschen 24 vorgesehen, die in eine Einschubrichtung R des Befestigungsclips 10 hintereinander an den Seitenflächen 22 angeordnet sind, also jeweils paarweise einen verschiedenen Abstand zum Flansch 20 des Halteelements 12 aufweisen. An den beiden übrigen Seitenflächen 26 (siehe Figur 2), also im Querschnitt um 90° versetzt zu den Rastlaschen 24, ist jeweils ein Spreizarm 28 am Grundkörper 18 ausgebildet, der hier als Blattfeder ausgebildet ist, die am in Einschubrichtung R hinteren Ende des Halteelements 12 mit dem Grundkörper 18 verbunden ist. Am Halteelement 12 sind des Weiteren an den ersten Seitenflächen 22 längliche Ausnehmungen 30 vorgesehen, die in Einschubrichtung R vor den Rastlaschen 24 vorgesehen sind.

Das Spreizelement 14 hat ebenfalls einen im Wesentlichen rechteckigen Querschnitt, wobei der Querschnitt des Spreizelements 14 so ausgebildet ist, dass das Spreizelement 14 gegen die Einschubrichtung R in die Aussparung 19 des Halteelements 12 eingeschoben werden kann. An zwei gegenüberliegenden, mit den ersten Seitenflächen 22 des Halteelements 12 korrespondierenden ersten Seitenflächen 32 des Spreizelements 14 sind Rasthaken 34 vorgesehen, die, wie im Folgenden dargestellt wird, in die länglichen Ausnehmungen 30 am Grundkörper 18 des Halteelements 12 einrasten können. An den zweiten Seitenflächen 36 sind Einführschrägen 38 vorgesehen, die mit den Spreizarmen 28 des Halteelements 12 zusammenwirken können und diese radial nach außen in eine gespreizte Stellung bringen können.

In der Aussparung 19 ist des Weiteren ein hier nicht gezeigtes Zugmittel, insbesondere eine Schraube vorgesehen. Die Schraube ist am Flansch 20 des Halteelements 12 drehbar gelagert, wobei ein Werkzeug in Einschubrichtung R in die Aussparung 19 eingeführt werden kann, um die Schraube zu drehen. Das Gewinde der Schraube greift am Spreizelement 14 an, so dass das Spreizelement 14 durch Drehen der Schraube entgegen der Einschubrichtung R in die Aussparung 19 des Halteelements 12 gezogen werden kann.

In den Figuren 1 bis 4 ist der Befestigungsclip in einer Vormontageposition dargestellt, in der das Halteelement 12 und das Spreizelement 14 einstückig über die Verbindungsstege 16 miteinander verbunden sind. Wie insbesondere in den Figuren 1 und 2 zu sehen ist, sind das Verbindungsstege 16 am in Einschubrichtung R vorderen Ende des Halteelements 12 und am in Einschubrichtung R hinteren Ende des Spreizelement 14 vorgesehen, so dass das Halteelement 12 und das Spreizelement 14 von den Verbindungsstegen 16 gewissermaßen in Einschubrichtung R hintereinander gehalten werden.

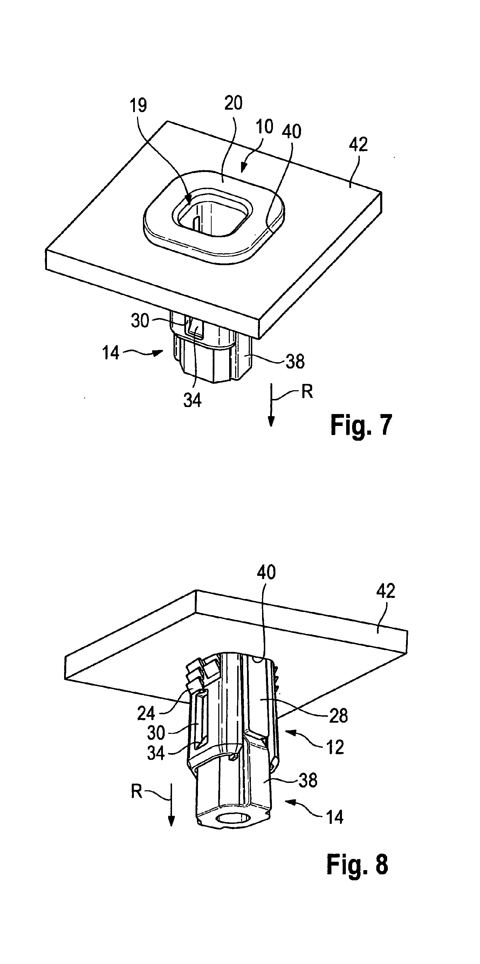

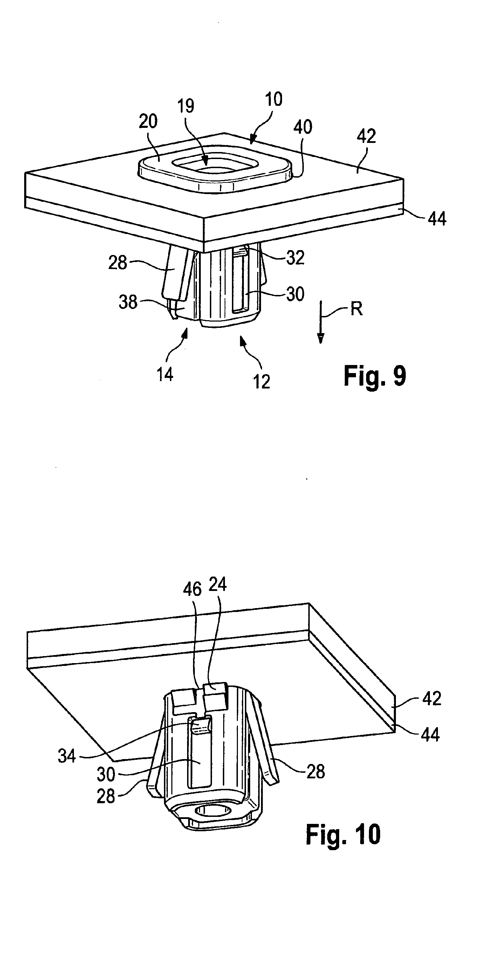

In dieser Vormontageposition kann der Befestigungsclip 10 in eine Öffnung 40 eines Bauteils 42 eingesetzt werden (siehe Figuren 7 und 8) und dieses Bauteil 42 anschließend an einem Träger 44 befestigt werden. Hierzu wird der Befestigungsclip 10 durch eine Öffnung 46 des Trägers 44 durchgeführt. Danach werden die Spreizarme 28 aufgespreizt, wodurch der Befestigungsclip 10 am Träger 44 fixiert ist und somit das Bauteil 42 gegen den Träger 44 gedrückt wird (siehe Figuren 9 und 10).

Nach dem Einsetzen des Befestigungsclips 10 in das Bauteil 42 und den Träger 44 wird das Spreizelement 14 durch das Zugmittel gegen die Einschubrichtung R in die Aussparung 19 des Halteelements 12 gezogen. Durch die auf das Spreizelement 14 wirkende Zugkraft werden die Verbindungsstege 16, die als Sollbruchstelle dienen, getrennt, sodass das Spreizelement 14 relativ zum Halteelement 12 verschiebbar ist. Anschließend wird das Spreizelement 14 so weit in die Aussparung 19 des Halteelements 12 eingezogen, bis die Rasthaken 34 in die länglichen Ausnehmungen 30 am Grundkörper 18 des Halteelements 12 eingreifen.

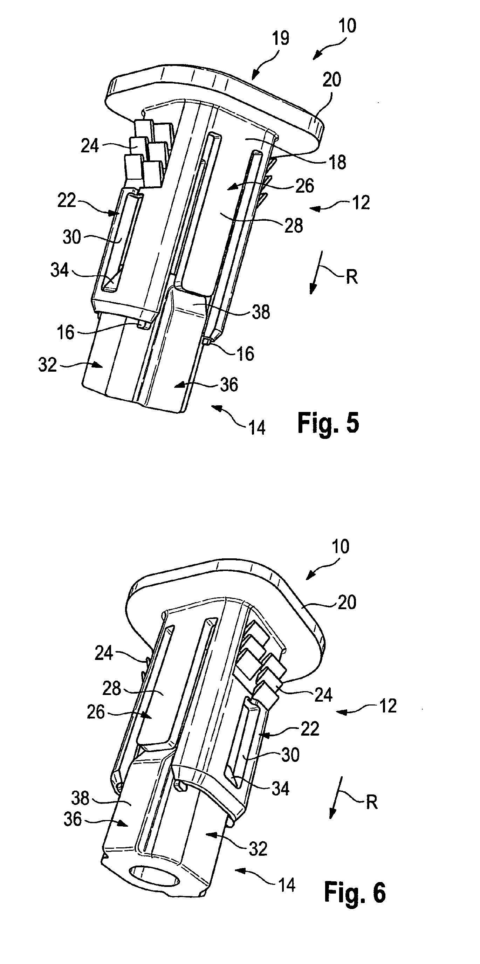

Diese Zwischenmontageposition ist in den Figuren 5 bis 8 dargestellt. In dieser Zwischenmontageposition ist das Spreizelement 14 gegen die Einschubrichtung R gegen das Halteelement 12 verschiebbar, wobei der Verschiebeweg durch die längliche Ausnehmung 30 begrenzt wird. Die Einführschrägen 38 des Spreizelements 14 liegen in dieser Zwischenmontageposition bereits an den Spreizarmen 28 an, wirken aber auf diese keine Kraft aus, sodass sich die Spreizarme weiterhin in der Ausgangsstellung befinden, in der die Spreizarme 28 nicht über den Grundkörper 18 des Halteelements 12 hinausragen.

Es ist auch möglich, dass das Spreizelement 14 vor dem Einsetzen des Befestigungsclips 10 in die Öffnung 40 des Bauteils 42 in die Zwischenmontageposition gebracht wird, beispielsweise, weil so ein einfacheres Lösen der Sollbruchstellen möglich ist. Da die Bauteile auch in der Zwischenmontageposition unverlierbar durch die durch den Rasthaken 34 und die längliche Ausnehmung 30 gebildete Rastverbindung miteinander verbunden sind, ist auch so ein einfaches Einsetzen ohne die Gefahr, dass Teile verloren gehen, sichergestellt.

Wie insbesondere in Figur 8 zu sehen ist, wird der Befestigungsclip in der Zwischenmontageposition durch die Rastlaschen 24 vorläufig in der Öffnung 40 des Bauteils 42 fixiert, sodass ein Herausrutschen oder ein Verschieben der Position des Befestigungsclips durch die Rastlaschen 24 verhindert ist. Die Rastlaschen 24 dienen aber lediglich der Fixierung des Befestigungsclips 10 während der Montage und können keine ausreichende Haltekraft aufbringen, um das Bauteil 42 am Träger 44 zu fixieren.

Da am Halteelement 12 mehrere in Einschubrichtung R beabstandete Rastlaschen 24 vorgesehen sind, kann der Befestigungsclip 10 durch diese auch bei verschiedenen Bauteildicken sicher fixiert wird.

Die endgültige Fixierung erfolgt in einem nächsten Montageschritt, in dem das Spreizelement 14 von der Zwischenmontageposition ausgehend weiter in die Aussparung 19 des Halteelements 12 eingezogen wird (Figuren 9 und 10). Dabei drängen die Einführschrägen 38 die Spreizarme 28 radial nach außen, sodass sich die Spreizarme 28 auf der Rückseite des Trägers 44 auseinanderspreizen und dadurch den Befestigungsclip 10 und somit das Bauteil 42 am Träger 44 fixieren.

Die rechteckige Form des Befestigungsclips 10 stellt sicher, dass bei einem Drehen der Schraube, um das Spreizelement 14 in das Halteelement 12 hineinzuziehen, ein Mitdrehen des Halteelements 12 verhindert ist. Es ist aber auch denkbar, dass der Befestigungsclip 10 eine andere Querschnittsform aufweist, die ein Mitdrehen des Befestigungsclips 10 sicher verhindert. Es ist auch denkbar, dass, insbesondere bei runden Querschnitten, zusätzliche Elemente am Außenumfang des Grundkörpers 18 vorgesehen sind, die ein solches Mitdrehen verhindern.

## Patentansprüche

1. Befestigungsclip (10) zur Befestigung eines Bauteils (40) an einem Träger (44), mit einem Halteelement (12), das in eine Einschubrichtung (R) in eine Öffnung (46) des Trägers (44) eingeschoben werden kann und das mehrere Spreizarme (28) aufweist, die hinter der Öffnung (46) des Trägers (44) eingreifen können, und mit einem Spreizelement (14), das gegen die Einschubrichtung (R) in eine Aussparung (19) des Halteelements (12) eingeschoben werden kann, sodass die Spreizarme (28) aus einer Ausgangsstellung in eine gespreizte Stellung gebracht werden, wobei in einer Vormontageposition das Halteelement (12) und das Spreizelement (14) einstückig miteinander durch Verbindungsstege (16) verbunden sind, die jeweils eine Sollbruchstelle darstellen, und die insbesondere zwischen dem in Einschubrichtung (R) vorderen Ende des Halteelements (12) und dem in Einschubrichtung (R) hinteren Ende des Spreizelements (14) vorgesehen sind.

2. Befestigungsclip nach Anspruch 1, **dadurch gekennzeichnet, dass** am Halteelement (12) und am Spreizelement (14) korrespondierende Rastelemente vorgesehen sind, die das Spreizelement (14) in einer Zwischenmontageposition, in der die Sollbruchstelle gelöst und das Spreizelement (14) teilweise in das Halteelement (12) eingeschoben ist, aber sich die Spreizarme (28) in der Ausgangsstellung befinden, am Halteelement (12) fixieren.

3. Befestigungsclip nach Anspruch 2, **dadurch gekennzeichnet, dass** die Rastverbindung durch einen Rasthaken (34) und eine längliche Ausnehmung (30) gebildet ist, in der der Rasthaken (34) in Einschubrichtung (R) verschiebbar ist, sodass das Spreizelement (14) von der Zwischenmontageposition in die Endmontageposition verschiebbar ist, ohne die Rastverbindung zu lösen.

4. Befestigungsclip nach einem der vorhergehenden Ansprüche, **dadurch gekennzeichnet, dass** am Halteelement (12) ein Zugmittel, insbesondere eine Schraube vorgesehen ist, das am Spreizelement (14) angreift und dieses gegen die Einschubrichtung (R) in das Halteelement (12) ziehen kann.

5. Befestigungsclip nach einem der vorhergehenden Ansprüche, **dadurch gekennzeichnet, dass** an der Außenseite des Halteelements (12) Rastlaschen (24) vorgesehen sind, die an der Öffnung (46) des Trägers (44) eingreifen können.

6. Befestigungsclip nach Anspruch 5, **dadurch gekennzeichnet, dass** mehrere jeweils paarweise gegenüberliegende Rastlaschen (24) vorgesehen sind, die in Einschubrichtung (R) beabstandet voneinander sind.

7. Befestigungsclip nach einem der vorhergehenden Ansprüche, **dadurch gekennzeichnet, dass** das Halteelement (12) rechteckig ausgebildet ist und die Rastlaschen (24) an entgegengesetzten Seitenflächen (22) vorgesehen sind.

8. Befestigungsclip nach Anspruch 7, **dadurch gekennzeichnet, dass** die Spreizarme (28) an den beiden übrigen Flächen (26) des Halteelements (12) vorgesehen sind.

9. Befestigungsclip nach einem der vorhergehenden Ansprüche, **dadurch gekennzeichnet, dass** das Spreizelement (14) Einführschrägen (38) aufweist, die die Spreizarme (28) radial nach außen drücken.
